# EUROPEAN PATENT APPLICATION

(11) **EP 1 519 128 A2**
(43) Date of publication of application: **30.03.2005**
(21) Application number: 04022197.0
(22) Date of filing: 17.09.2004
(51) Int. Cl.: F25B 41/06, F25B 1/04, F25B 49/02

(54) **Refrigeration cycle**

(30) Priority: 25.09.2003 JP 2003332651
(71) Applicant: TGK Co., Ltd., Hachioji-shi, Tokyo 193-0942 (JP)
(72) Inventor: Hirota, Hisatoshi, Hachioji-shi Tokyo 193-0942 (JP); Saeki, Shinji, Hachioji-shi Tokyo 193-0942 (JP); Nishiyama, Takeyasu, Hachioji-shi Tokyo 193-0942 (JP)
(74) Representative: Grünecker, Kinkeldey, Stockmair & Schwanhäusser Anwaltssozietät

(57) **Abstract**

A refrigeration cycle containing a variable displacement compressor 1 combines an expansion valve 4 controlling the flow rate to an evaporator 5 such that normally refrigerant at the evaporator outlet always maintains a predetermined level of superheat. A minimum flow rate-securing device 7 is provided to assure a predetermined minimum flow rate when the flow rate is otherwise most restricted.

## Description

The invention relates to a refrigeration cycle according to the preamble of claim 1.

Conventionally, in an automotive air conditioning system, a variable displacement compressor continuously changes the discharge volume such that the refrigerant flow rate is held at a predetermined value depending on the cooling load, irrespective of the rotational speed of the engine driving the compressor.

A known compressor has a swash plate in a crankcase on a shaft driven by the engine. The inclination angle of the swash plate is variable by controlling the pressure in the crankcase. The inclination angle determines the stroke of pistons and the discharge volume. The crankcase pressure is controlled by a capacity control valve located between the discharge chamber and the crankcase. There exist capacity control valves of e.g. a Ps control type that senses the suction pressure Ps and controls the crankcase pressure such that the suction pressure Ps is held constant, or a Pd-Ps control type that senses the differential pressure between the discharge and suction pressures and controls the crankcase pressure such that the differential pressure is held constant, and a flow rate control type that senses the discharge flow rate and controls the crankcase pressure such that the discharge flow rate is held constant. Such known refrigeration cycles use either a thermostatic or a solenoid-controlled electronic expansion valve. The thermostatic type throttles high-temperature, high-pressure liquid refrigerant into low-temperature, low-pressure refrigerant, and controls the flow rate to the evaporator, such that refrigerant vapour at the evaporator outlet maintains a predetermined level of superheat.

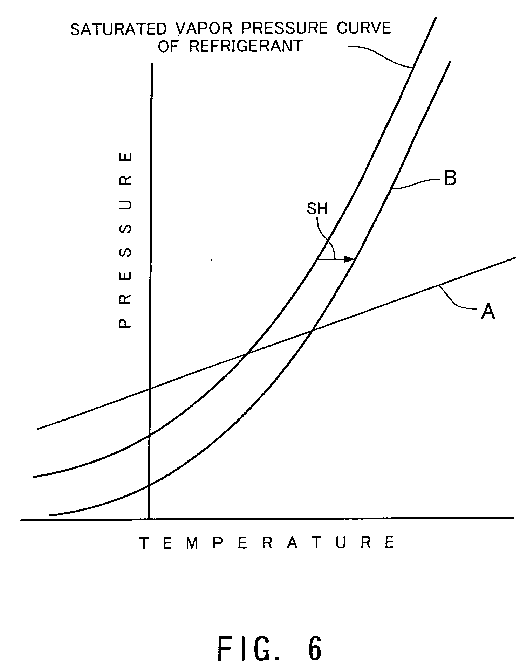

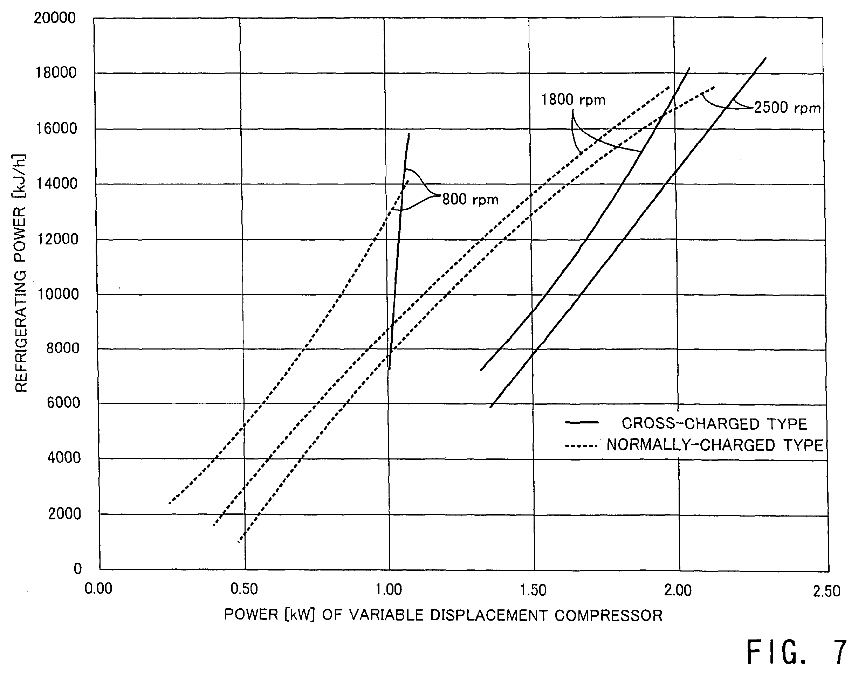

Fig. 6 shows characteristics of thermostatic expansion valves, and Fig. 7 shows power variations of a compressor in association with cooling power variations. A known cross-charged type thermostatic expansion valve has characteristics represented by a curve A in Fig. 6. The temperature-pressure characteristic in a temperature-sensing tube has a gentler gradient than that of a saturated vapour pressure curve of the refrigerant used in the refrigeration cycle. During low load operation (evaporator outlet temperature is low) the pressure in the temperature-sensing tube is higher than the saturated vapour curve, so that the expansion valve is continuously held open without responding to the pressure at the evaporator outlet. Therefore, within one system of a refrigeration cycle, the flow rate control is carried out at two locations, i.e. at the variable displacement compressor and at the thermostatic expansion valve. In the Ps control-type compressor, the compressor controls the suction pressure Ps, (approximately equal to the evaporator outlet pressure), such that the suction pressure Ps is held constant within a variable displacement region. Due to the incapability of a substantial control action during low-load and low-flow rate operation, the expansion valve is prevented from responding sensitively to the evaporator outlet pressure and hence from causing contention with the control of the compressor, so that a stable control behaviour without hunting is achieved. Since the expansion valve remains open during a low-load operation, refrigerant from the evaporator outlet returns to the compressor, in a not completely evaporated state but still with some liquid, i.e. lubricating oil dissolved in the liquid also returns to the compressor. A sufficient oil circulation is maintained even when the flow rate is low due to a small displacement of the compressor when the load is small. The returned oil prevents seizure of the compressor.

A known normally-charged or parallelly-charged type thermostatic expansion valve has characteristics represented by a curve B in Fig. 6 and controls the flow rate to the evaporator such that the evaporator outlet temperature is always held at a higher value than the saturated vapour pressure curve of the refrigerant used in the refrigeration cycle, i.e. that a superheat level of SH is maintained. The refrigerant is delivered in a fully evaporated state from the evaporator to the compressor. The refrigeration cycle then shows an excellent coefficient of performance.

In practice the cross-charged type thermostatic expansion valve is preferred because it is insensitive to flow rate changes when the compressor operates with small displacement, and prevents a hunting effect, and because sufficient oil circulation is maintained even during small displacement operation.

Fig. 7 shows power variations of the compressor measured with respect to the cooling power of either the cross-charged type or the normally-charged type thermostatic expansion valve equipped refrigeration cycle. Each solid line belongs to the cross-charged type. Each broken line belongs to the normally-charged type. Further, Fig. 7 shows power changes in association with cooling power caused by varying the flow rate, temperature, and humidity of air blown onto the evaporator to produce various states ranging from a low-load state to a high-load state, in respective cases where the compressor is operated at rotational speeds of 800 rpm, 1,800 rpm, and 2,500 rpm.

In Fig. 7, when the speed of the compressor is high, with both the cross-charged and the normally-charged type, the change of the power consumption is substantially proportional to that in the cooling power. If the compressor enters a variable displacement region when the rotational speed is low e.g. during idling of the driving engine, the compressor power consumption (with the cross-charged type) remains almost unchanged even if the cooling power changes. The power consumption of the compressor (with the normally-charged type) changes substantially proportionally to the change of the cooling power. In a low cooling load region the cross-charged type stops to restrict the flow irrespective of the rotational speed, causing liquid containing oil to return to the compressor, which, of course, inhibits a reduction of the cooling power. On the other hand, the normally-charged type continues to restrict the flow in the low cooling load region, and hence the power consumption is reduced in proportion to the reduction of the cooling power. When the flow rate is small, however, the normally-charged type inevitably causes hunting.

Since the cross-charged type stops to restrict the flow rate halfway and remains open in a low cooling load region this type of expansion valve meets both the requirement of securing a minimum flow rate for preventing hunting and the requirement of securing a minimum flow rate for oil circulation, at the same time. In view of this, the cross-charged type is preferred for being used in combination with a variable displacement compressor.

In cases where the cross-charged type is used, particularly when the compressor rotational speed is low, the power consumption hardly changes even if the cooling load decreases. In cases where the normally-charged type is used instead, the power consumption for the same cooling power would be significantly lower for any rotational speed than with the cross-charged type, but the normally-charged type cannot be employed due to hunting and oil circulation problems.

It is an object of the invention to provide a refrigeration cycle which is capable of reducing power consumption while solving the problems of hunting and oil circulation.

This object is achieved by the features of claim 1.

Normally the expansion valve controls the flow rate to the evaporator like the normally or parallelly charged type such that the refrigerant at the evaporator outlet maintains a predetermined level of superheat, whereby the refrigeration cycle is always operated with the maximum coefficient of performance, while the power consumption of the variable displacement compressor is reduced. Further, since the expansion valve assures the predetermined minimum flow rate even when the flow rate is most restricted by the expansion valve, like the cross-charged type, the problems of hunting and oil circulation conventionally occurring during the control to the small flow rate are solved.

Embodiments of the invention will be described with reference to the drawings. In the drawings is:
- Fig. 1: a system diagram of a refrigeration cycle according to the invention,
- Fig. 2: a central longitudinal cross-section of a normally-charged type thermostatic expansion valve provided with a bypass passage,
- Fig. 3: a diagram of cooling power dependent power charges of a variable displacement compressor at 800 rpm,
- Fig. 4: a diagram of the power changes at 1,8000 rpm,
- Fig. 5: a diagram of the power change at 2,500 rpm,
- Fig. 6: a diagram of characteristics of a thermostatic expansion valve,
- Fig. 7: a diagram of cooling power dependent power changes of a variable displacement compressor.

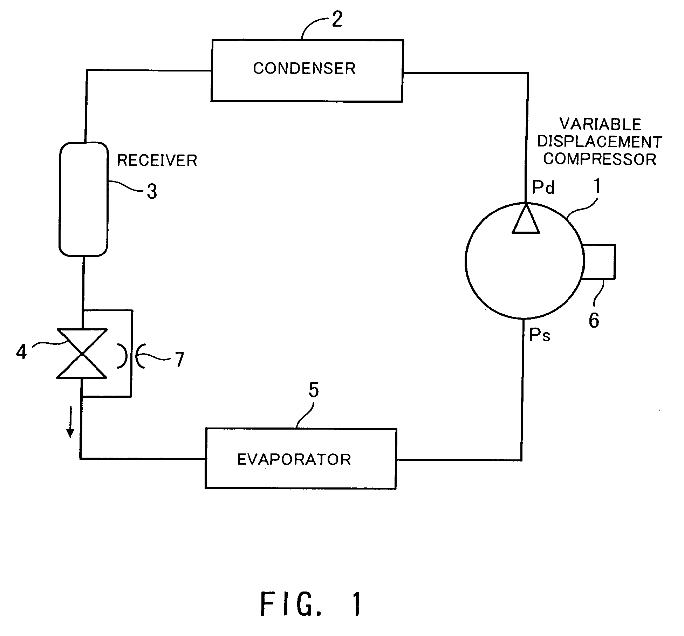

A refrigeration cycle in Fig. 1 comprises a variable displacement compressor 1, a condenser 2 that condenses the compressed refrigerant, a receiver 3 that separates the condensed refrigerant into vapour and liquid, an expansion valve 4 that performs throttling of the separated liquid refrigerant, and an evaporator 5 that evaporates the throttled refrigerant. The compressor 1 is provided with a capacity control valve 6 that controls the volume of discharged refrigerant, i.e. the displacement of the compressor. The expansion valve 4 is provided with a minimum flow rate-securing means 7 for assuring a predetermined minimum flow rate even when the flow rate otherwise is most restricted.

The capacity control valve 6 is either an internal control type whose set value cannot be changed or is an external control type whose set value can be freely changed by an external electric signal. The internal control-type capacity control valve 6 can be a mechanical Ps control type that senses the suction pressure Ps of the variable displacement compressor 1, and controls pressure in a crankcase such that the suction pressure Ps is held constant. The external control-type capacity control valve 6 can either be a Ps control type which freely sets the suction pressure Ps of the compressor, which is to be controlled to be constant, by the value of an electric current supplied to its solenoid, or a Pd-Ps control type which freely sets the differential pressure between the discharge pressure Pd and the suction pressure Ps of the compressor, which is to be controlled to be constant, by the value of an electric current supplied to its solenoid, or a flow rate control type which freely sets the flow rate discharged from the compressor, which is to be controlled to be constant.

The expansion valve 4 in each case can either be a normally-charged type including the minimum flow rate-securing means 7, or can be a solenoid-driven electronic expansion valve already provided with the function of the minimum flow rate-securing means 7. In the thermostatic expansion valve, the minimum flow rate-securing means 7 can be implemented by a bypass passage formed in a valve section. The bypass passage allows a predetermined flow rate even when the valve element is seated on the valve seat. In the case of the electronic expansion valve, the function of the minimum flow rate-securing means 7 can be realized by preventing the valve element from being fully closed e.g. by contact between the valve element and a stopper immediately before the valve element would be seated on the valve seat.

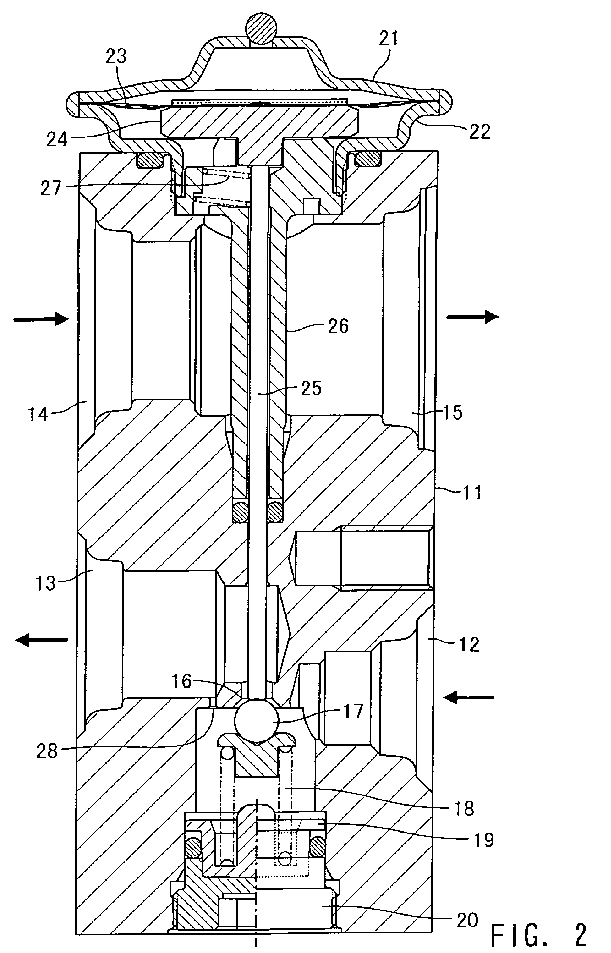

The normally-changed type thermostatic expansion valve in Fig. 2 has a body 11 with a port 12 in a side wall for high-temperature, high-pressure liquid refrigerant. From a port 13 low-temperature, low-pressure refrigerant is supplied to the evaporator 5. A port 14 receives evaporated refrigerant from the evaporator 5. From a port 15 refrigerant is returned to the compressor 1.

A valve seat 16 is integrally formed with the body 11 in a fluid passage between the ports 12, 13. A ball-shaped valve element 17 is provided upstream of the valve seat 16. A space accommodating the valve element 17 contains a helical compression spring 18 urging the valve element 17 in valve closing direction. The spring 18 is held by a spring receiver 19 fitted into an adjustment screw 20 which in turn is screwed into the lower end of the body 11 for adjusting the load of the spring 18.

At the top end of the body 11 (Fig. 2) there is provided a power element. The power element which comprises an upper housing 21, a lower housing 22, a diaphragm 23 dividing the space enclosed by the housings 21 and 22, and a disk 24 disposed below the diaphragm 23. A temperature-sensing tube hermetically enclosed by the upper housing 21 and the diaphragm 23 is filled with the same refrigerant as the refrigeration cycle (normally-charged type).

Between the disk 24, and the valve element 17 extends a shaft 25 which transmits displacements of the diaphragm 23. The upper end of the shaft 25 is held by a holder 26 extending across the fluid passage between the ports 14 and 15. The holder 26 contains a helical compression spring 27 laterally loading the upper end of the shaft 25, such that the spring 27 suppresses longitudinal vibrations of the shaft 25 which could occur in response to pressure fluctuations of the high-pressure refrigerant.

At a location close to the valve seat 16, the body 11 is formed with a bypass passage 28 bypassing the valve section or valve seat 16. The bypass passage 28 assess a predetermined but sufficient flow rate for securing oil circulation, without causing a hunting effect between the control of the expansion valve and that of the compressor 1, even when the valve section is fully closed.

The power element senses the pressure and temperature of the refrigerant returned to the port 14 from the evaporator 5, and controls the valve lift by either pushing the valve element 17 in valve-opening direction when the refrigerant temperature is high or when the refrigerant pressure is low, or by moving the valve element 17 in valve-closing direction when the refrigerant temperature is low or when the refrigerant pressure is high. Liquid refrigerant from the receiver 3 flows through the port 12 into the space accommodating the valve element 17, and is throttled when passing through the valve section the valve lift of which is controlled into low-temperature, low-pressure refrigerant. The refrigerant from the port 13 is supplied to the evaporator 5 and is exchanges heat with air in a vehicle compartment, and then is returned to the port 14. At this time, the flow rate to the evaporator 5 is controlled such that the refrigerant maintains a predetermined level of superheat at the evaporator outlet and so that the refrigerant returns in a completely evaporated state to the compressor 1. When the thermostatic expansion valve further on progressively restricts the refrigerant flow rate due to a decrease in the cooling load until the valve element 17 is seated on the valve seat 17, (fully-closed state), nevertheless flows through the bypass passage 28 at the predetermined minimum flow rate.

Instead of the shown bypass passage 28 close to the valve seat 16, a groove extending in the direction of the refrigerant flow could be formed in the seating surface of the valve seat 16. as a further alternative, an orifice or a slit can be formed in the valve element 17. All mentioned alternatives even could be combined.

Next, preferred examples of combinations of variable displacement compressors 1 and of expansion valves 4 will be described. The compressor 1 could be the internal control-based Ps control type, or the external control-based Ps control type, or the external control-based Pd-Ps control type, or even the external control-based flow rate control type. The expansion valve 4 could be the normally-charged type having the bypass passage 28 or could be the external control-based electronic type.

### Example 1

Combination of an internal control-based or external control-based Ps control type with the normally-charged type thermostatic expansion valve 4 having the bypass passage 28:
When the cooling load is low, the flow rate can be more reduced than when a cross-charged type thermostatic expansion valve is employed. Therefore, example 1 is advantageous because the power consumption of the compressor 1 can be reduced. However, when the bypass amount is excessively reduced, hunting tends to occur between the controls of the Ps control type compressor 1 and of the expansion valve 4. In general, as long as the refrigerant flows at a flow rate of approximately 80 kg/h, it is possible to prevent hunting. Then, the bypass passage 28 should be an orifice with a diameter of approximately 0.7 mm to 1.2 mm, preferably of approximately 1.0 mm.

### Example 2

Combination of an external control-based Pd-Ps control type variable displacement compressor 1 and the normally-charged type thermostatic expansion valve having the bypass passage 28:
When the cooling load is low, the flow rate can be more reduced than if a cross-charged type thermostatic expansion valve were employed. Example 2 is advantageous because the power consumption of the compressor 1 can be reduced. In this case, differently from the Ps control type, the Pd-Ps control-type compressor 1 does not cause hunting even when the bypass amount is reduced, so that the bypass passage 28 can be formed by a passage having a minimum size just as required for oil circulation. This small passage allows to even further reduce the power consumption of the compressor 1. In general, the minimum flow rate required for oil circulation is approximately 50 kg/h. The bypass passage 28 may be an orifice with a diameter of approximately 0.5 mm. In case of an external control-based flow rate control type variable displacement compressor 1 it is preferable that the bypass passage 28 corresponds to an orifice with a diameter of approximately 0.5 mm.

### Example 3

Combination of the internal control-based or external control-based Ps control type variable displacement compressor 1 and the external control-based electronic expansion valve that can be controlled such that it does not fully close:
The electronic expansion valve can be formed e.g. by a flow rate control-type solenoid valve that controls the flow rate by an external signal and so that hunting is suppressed when the flow rate is small. This allows to then reduce the power consumption of the compressor 1.

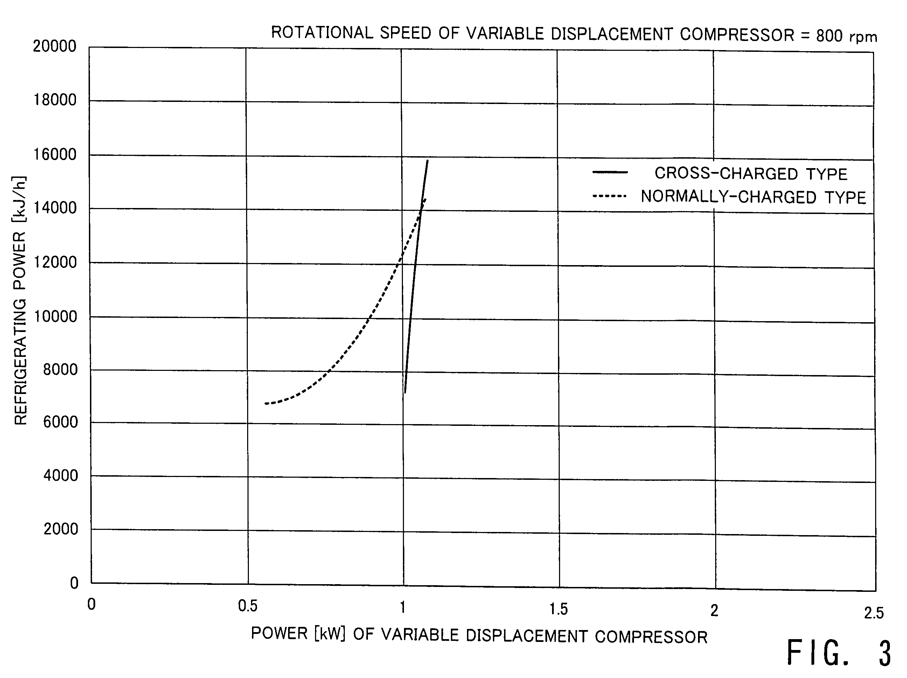

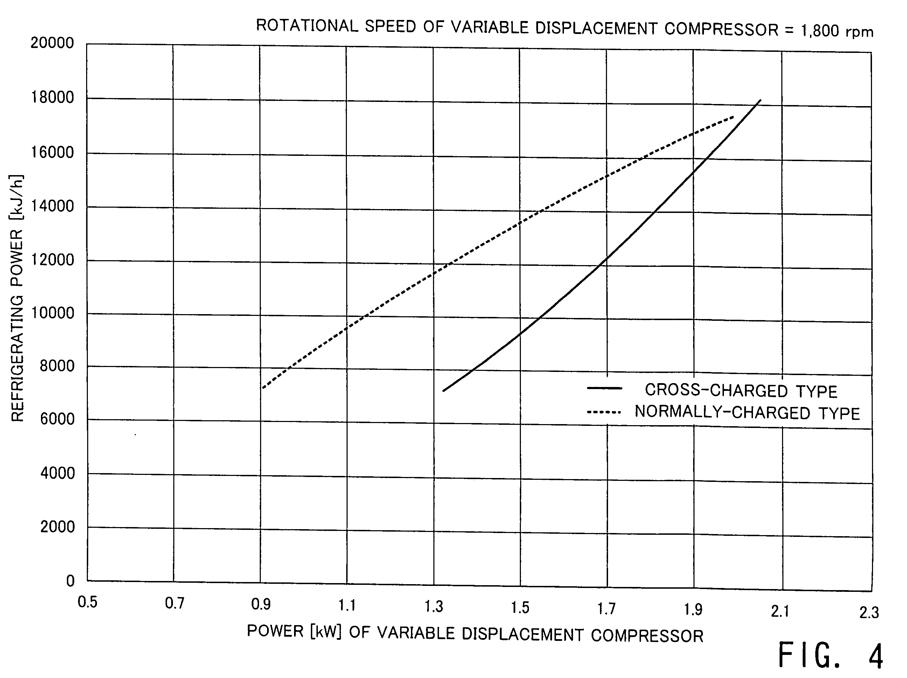

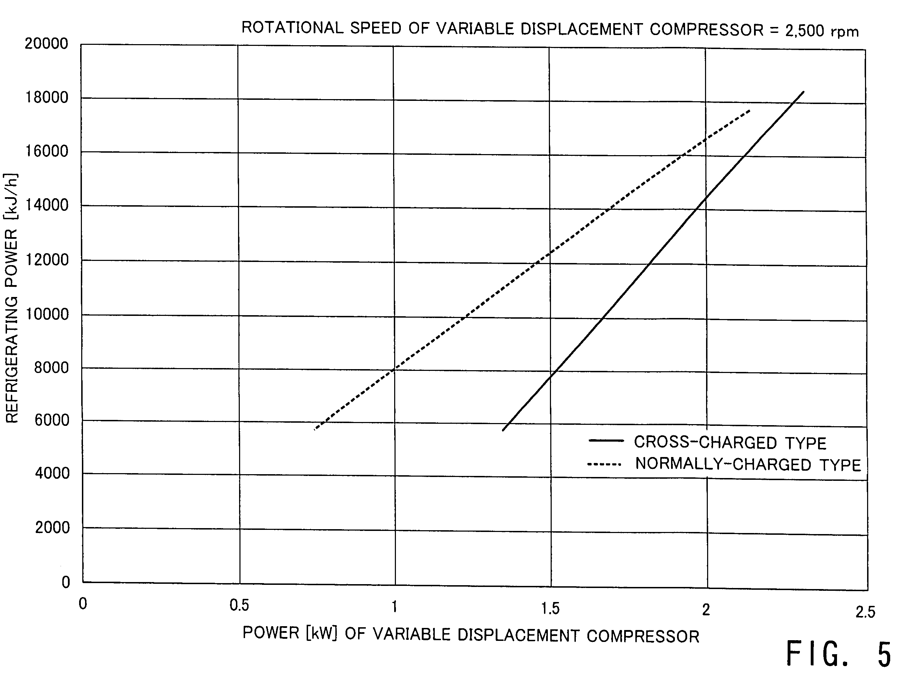

In Figs 3 to 5, for 800 rpm, 1,800 rpm, and 2,500 rpm, when the variable displacement compressor 1 is in a variable displacement region due to low cooling load, the power consumption corresponding to the same cooling power level is improved by approximately 30 % corresponds to a combination of the variable displacement compressor and the cross-charged type thermostatic expansion valve. It should be noted that due to characteristics of the normally-charged type, bypass passage equipped thermostatic expansion valve 4, the power consumption is also reduced in proportion to a decrease of the cooling power, and that the lower limit value of the cooling power is similar to the cross-charged type thermostatic expansion valve.

## Claims

1. A refrigeration cycle including a variable displacement compressor (1), an expansion valve (4) and at least an evaporator (6), **characterised by**
an expansion valve (4) for controlling the refrigerant flow rate to the evaporator (6) by restriction such that the refrigerant at the evaporator outlet maintains a predetermined level of superheat in normal times during which the flow rate is not restricted most, the expansion valve (4) being designed to assure a predetermined minimum flow rate in an operational state when the flow rate is most restricted.

2. Refrigeration cycle as in claim 1, **characterised in that** the variable displacement compressor (1) senses suction pressure (Ps), and controls pressure (Pc) in a crankcase in response to the value of the sensed suction (Ps) pressure such that the suction pressure (Ps) is held constant, and
that the expansion valve (4) is a normally-charged type thermostatic expansion valve having a valve consisting of a valve element (17) and a valve seat (16) and a bypass passage (28) bypassing the valve section when the valve element is seated on the valve seat.

3. Refrigeration cycle as in claim 2, **characterised in that** the bypass passage (28) has a size large enough to allow a minimum flow rate required at least for preventing hunting.

4. Refrigeration cycle as in claim 1, **characterised in that** the variable displacement compressor (1) senses the differential pressure between the discharge pressure (Pd) and the suction pressure (Ps), and controls the pressure (Pc) in a crankcase in response to the value of the sensed differential pressure such that the differential pressure is held constant, and
that the expansion valve (4) is a normally-charged type thermostatic expansion valve having a valve section consisting of a valve element (17), a valve seat (16) and a bypass passage (28).

5. Refrigeration cycle as in claim 4, **characterised in that** the bypass passage (28) has a size large enough to assure a minimum flow rate required at least for oil circulation.

6. Refrigeration cycle as in claim 1, **characterised in that** the variable displacement compressor (1) senses the suction pressure (Ps) and controls the pressure (Pc) in a crankcase in response to the value of the sensed suction pressure (Ps) such that the suction pressure (Ps) is held constant, and
that the expansion valve (4) is a solenoid-driven electronic expansion valve having a valve seat and a valve element the valve lift of which can be controlled such that expansion valve cannot be fully closed.

7. Refrigeration cycle as in at least one of claims 1 to 6, **characterised in that** the bypass passage (28) is defined by at least one aperture bypassing the valve seat or a groove in the valve seat or a slit in the valve element, respectively.

8. Refrigeration cycle as in at least one of claims 1 to 6, **characterised in that** the electronic expansion valve has a stopper for limiting the valve element stroke in valve closing direction.

9. Refrigeration cycle as in at least one of claims 1 to 8 **characterised in that** the expansion valve (4) is designed with an operation behaviour like a cross-charged type when the compressor is operating with small displacement and like a normally or parallelly charged type when the compressor is operating with larger displacement.
